# EUROPEAN PATENT APPLICATION

(11) **EP 4 303 169 A1**
(43) Date of publication of application: **10.01.2024**
(21) Application number: 23181332.0
(22) Date of filing: 26.06.2023
(51) Int. Cl.: B66F 9/065, B66C 1/68, B66C 1/28, B66C 1/62

(54) **A VEHICLE FOR RESCUING RACING CARS, A METHOD FOR RESCUING RACING CARS USING THE VEHICLE, AND USE OF THE VEHICLE FOR RESCUING RACING CARS**

(30) Priority: 04.07.2022 SE 2250837
(71) Applicant: Granfors, Joakim, 635 13 Eskilstuna (SE)
(72) Inventor: Granfors, Joakim, 635 13 Eskilstuna (SE)
(74) Representative: Swea IP Law AB

(57) **Abstract**

The present invention relates to a vehicle (1) for rescuing racing cars (3) during motor races, and a method for rescuing racing cars using the vehicle (1). The vehicle (1) comprises a carriage (2) movable in at least two opposite directions, a platform (5) rotatably connected to the carriage (2) so that the platform (5) is rotatable at least 180° with respect to the carriage (2), an arm (3) attached to the platform (5) for lifting the racing car, a tool (4b) connected to the arm (3) for holding the car during the rescue, a swivelling tool holder (6) coupled to an outer end of the arm (3), and a control system (7) for controlling the motions of the platform (5), the swivelling tool holder (6), and the arm (3) upon receiving commands from a driver of the vehicle. The tool (4b) comprises a connection part rigidly connected to the swivelling tool holder (6) so that the tool is rotated upon rotation of the swivelling tool holder, and a holding member for holding the racing car, and the holding member is configured to hold the car in such way so that the car is rotated upon rotation of the tool.

## Description

### Technical field

The present invention relates to a vehicle for rescuing racing cars. The invention also relates to a method for rescuing cars using the vehicle during motor races. The invention further relates to use of the vehicle for rescuing racing cars, such as formula cars and rally cars.

### Background

During motor races on tracks, such as Formula 1 and motor rally, it happens quit often that some of the racing cars crashes. When this happens, it is necessary to pick up the crashed car and move the car away from the track as quickly as possible to avoid further accidents such as to avoid that the other racing cars will crash into the car. The cars are moved to a service track or service station in the vicinity of the track.

Today a crashed formula car is rescued using a telescopic wheel loader including a telescopic arm provided with a hook, and a lifting tool including an elongated strap that forms a loop connected to the hook of the telescopic arm. The telescopic wheel loader lifts the car and moves it away from the track to the service station/track. Several service personnel assist to thread the loop of the strap on a protrusion on top of the formula car. The service personnel also hold the car when the car is transported to the service station/track to prevent the car from spinning around. This is, for example, illustrated at:
https://www.bizonagro.ru/en/news/information/new/764/ showing an article from 15 August 2019 which discloses that telescopic loaders are provided to the organizing committee of the races "Formula 1 VTB Grand Prix of Russia 2019" to evacuate racing cars that have fallen from the race.

Rally cars are, for example, rescued using a truck provided with a crane. The service personal attaches a rope to a towbar on the rally car, which rope are used to tow the car by means of the truck.

A disadvantage with the existing methods for rescuing racing cars is that it is dangerous for the service personnel to stay on or close to the track during the rescuing of the cars when the racing is still going on. Another disadvantage is that the rescue takes long too time. Thus, there is a need for an improved method to remove the crashed cars from the track without the need of any person having to stay on the track.

### Summary

The object of the present invention is to make rescuing of racing cars during ongoing motor races safer and faster.

This aim is enabled by using a vehicle as defined in claim 1 for rescuing the racing cars.

The vehicle comprises a carriage linearly movable in at least two opposite directions, an arm for lifting the racing car, a tool connected to the arm for holding the racing car during the rescue, a platform rotatably connected to the carriage so that the platform is rotatable at least 180° with respect to the carriage, a swivelling tool holder comprising an inner part attached to an outer end of the arm, and an outer part rotatably arranged with respect to the inner part, and a control system for controlling the motions of the platform, the swivelling tool holder, and the arm upon receiving commands from a driver of the vehicle. The arm is attached to the platform. The tool comprises a connection part rigidly connected to the outer part of the swivelling tool holder so that the tool is rotated upon rotation of the outer part of the swivelling tool holder, and a holding member for holding the racing car, wherein the holding member is rigidly attached to the connection part and configured to hold the racing car in such way that the racing car is rotated upon rotation of the tool.

The vehicle makes it possible to rescue crashed cars without having any people on the track or close to the track during the rescue. The control system makes it possible for the driver of the vehicle to control the motions the tool with high accuracy in several degrees of freedom. The only person required to carry out the rescue is the driver of the vehicle, and that person is sitting safely inside the vehicle at a distance from the track. Thus, the vehicle according to the invention improves safety when rescuing racing cars during an ongoing car race.

The rescue of a crashed car can also be done faster than in the prior art. The carriage is linearly movable in at least two opposite directions along the grounds. Thus, the vehicle can be moved towards the crashed car to pick up the car and can be moved away from the track while holding the car. The vehicle is able to transport the car to a service station located at a distance from the present position of the car. The rotatable platform makes it possible to quickly move the car to an opposite side of the vehicle so that the vehicle can move the car away from the track without having to turn around the vehicle. Thus, the rescue of the car can be done faster which leads to increased safety during the rescuing.

A swivelling tool holder, also called a rotating tool holder, has a rotatable joint that makes it possible to rotate the tool. The swivelling tool holder makes it possible to rotate the tool relative to the outer end of the articulated arm, and accordingly relative to the platform.

The holding member is configured to hold the car so that the racing car is rotated upon rotation of the tool. This means that rotation of the racing car with respect to the outer end of the articulated arm, and accordingly relative to the platform, is controlled by the rotational movements of the swivelling tool holder when the tool has lifted the racing car from the ground. Thus, the driver can control the position of the racing car with respect to the platform when the tool has lifted the car. This enables rotation of the racing car to a suitable transportation position with respect to the platform when the vehicle carries the racing car. This is not possible if, for example, the tool holder comprises a strap that forms a loop. In such case, the loop holding the car will spin around the attachment point between the tool and the tool holder, due to the mass inertia of the car, when the tool holder rotates the tool, and accordingly it is not possible to control the position of the racing car with respect to the platform when the tool has lifted the car.

For example, the tool holder is configured to hold the car in a rigid or semirigid way so that rotation of the racing car with respect to the platform is controlled by the rotational movements of the swivelling tool holder when the tool has lifted the racing car from the ground. The feature that "the tool holder is configured to hold the car in a rigid or semirigid way" means that the tool holder is designed to hold the car in such way that the car follows the movements of the tool, in particular rotational movements of the tool. This makes it possible to control the position of the racing car with respect to the platform when the tool has lifted the racing car. The term semirigid means partly rigid, but not fully rigid.

According to an embodiment of the invention, the tool holder is configured to hold the car in a rigid way. In this case, the tool holder does not contain any strap.

According to an embodiment of the invention, the arm is an articulated arm having at least two joints. The articulated arm is movable with respect to the platform about at least two joints. An articulated arm provides increased performance of the arm.

According to an embodiment of the invention, the joins are hinge joints. Hinge joint are simpler to control than rotating joints.

According to an embodiment of the invention, the arm is pivotably attached to the platform. Thus, one of the joints of the arm is a pivotable joint arranged between the arm and the platform.

According to an embodiment of the invention, the swivelling tool holder is pivotably attached to an outer end of the articulated arm. Thus, one of the joints of the arm is a pivotable joint arranged between the arm and the tool holder.

According to an embodiment of the invention, the swivelling tool holder comprises one or more actuators arranged between the inner and outer parts so that the outer part can be tilted relative to the inner part. For example, the tool holder is a tilt rotator. If the vehicle is to be used to rescue rally cars, it is advantageous if the swivelling tool holder also can be tilted. This is not necessary when the cars are formula cars.

According to an embodiment of the invention, the holding member comprises two spaced apart contact portions rigidly connected to the outer part of the swivelling tool holder, and a strap extending between the two contact portions. This tool is suitable for rescuing formula cars provided with a protrusion on top of the car. The strap is arranged such that the tool holds the car in semirigid way so that the car is rotated upon rotation of the tool.

According to an embodiment of the invention, the strap is made of textile or reinforced textile. The strap preferably has some flexibility to facilitate the manoeuvre to put the strap on the protrusion on top of the formula car.

According to an embodiment of the invention, the length of the strap is at most 150% of the distance between the two contact points. Thus, the length of the strap is between 100% and 150% of the distance between the two contact portions. Suitably, the length of the strap is at most 130% of the length of the distance between the two contact points. The shorter the strap is compared to the distance between the two contact points, the more rigid becomes the connection between the car and the tool. Accordingly, it is avoided that the tool will spin around the attachment point of the tool to the tool holder when the tool holder rotates the tool.

According to an embodiment of the invention, the length of the strap is between 110% and 150% of the distance between the two contact portions. This gives the strap some flexibility to facilitate the manoeuvre to put the strap on the protrusion on top of the car, while the connection between the car and the tool becomes rigid enough to allow the car to be rotated upon rotation of the tool in a controlled way.

According to an embodiment of the invention, the holding member comprises two spaced apart arms rigidly connected to the tool holder, and each of the arms comprises one of the contact portions. This tool makes it easy to put the strap around the hook on the car. The arms facilitate control of the position of the strap with respect to the hook.

According to an embodiment of the invention, the holding member has an L-shaped design and comprises a protruding part to be inserted under the car. This tool is suitable for rescuing rally and racing cars, which do not have a protrusion on the top of the car. The protruding part can be inserted under the rally car and thus enable the tool to lift the car.

According to an embodiment of the invention, the vehicle comprises an excavator including the carriage, the platform, and the articulated arm.

According to another aspect, the aim of the present invention is achieved by a method for rescuing cars as defined in claim 10.

The method is carried out using a vehicle for rescuing racing cars, comprising a carriage linearly movable in at least two opposite directions along the ground, an arm for lifting the racing car, and a tool connected to the arm for holding the car during the rescue, a platform rotatably connected to the carriage so that the platform is rotatable at least 180° with respect to the carriage, a swivelling tool holder comprising an inner part attached to the outer end of the arm, and an outer part rotatably arranged with respect to the inner part, and a control system for controlling the motions of the platform, the swivelling tool holder, and the arm upon receiving commands from a driver of the vehicle, wherein the arm is attached to the platform, the tool comprises a connection part rigidly connected to the outer part of the swivelling tool holder so that the tool is rotated upon rotation of the outer part of the swivelling tool holder, and a holding member for holding the racing car, and the holding member is configured to hold the car in such way so that the car is rotated upon rotation of the tool.

The method comprises:
a) moving the carriage towards the car until the vehicle is close to the car to be rescued,
b) rotating the platform so that the articulated arm is pointing towards the car,
c) moving the tool towards the car by means of the articulated arm,
d) connecting the tool to the car by means of the arm and rotation of the swivelling tool holder,
e) lifting the car by means of the arm,
f) moving the car to a transport position by means of the arm and rotation of the swivelling tool holder, and
h) moving the carriage with the car in front of the vehicle.

This method makes it possible for the driver of the vehicle to quickly rescue the car without assistance of any service personnel. The racing car can be reached at any position along the track. The driver of the car controls the position and motion of the tool, by controlling the rotation of the platform, the joints of the arm, and the rotation of swivelling tool holder. The tool is connected to the racing car by means of the arm and rotation of the swivelling tool holder. Due to the rigid connection between the tool and the swivelling tool holder and the fact that the tool is configured to hold the racing car in such way that the racing car is rotated upon rotation of the tool, the driver can precisely control the motion and position of the car with respect to the vehicle. When the car has been lifted, the driver of the vehicle controls the tool so that the car in moved to a suitable transport position in order to facilitate the transportation of the car and to increase the safety of the transportation.

The method is suitable for rescuing racing car using the vehicle according to the invention.

According to an embodiment of the invention, the step a comprises moving the carriage in a first direction until the vehicle is close to the car to be rescued, and the step g comprises rotating the platform so that the arm is pointing in a second direction opposite the first direction, and moving the carriage in the second direction with the car in front of the vehicle. The platform is rotated 180° with respect to the first direction after the car has been moved to its transport position so that the car is pointing in a direction away from the track. This makes it possible for the vehicle to move away from the track in the same direction as it arrived to the track, with the car in a suitable transport position in front of the vehicle. Since the vehicle do not need to turn around before it is moved away from the track, the rescue of the car can be done faster which leads to increased safety during the rescuing.

According to an embodiment of the invention, the step f comprises rotating the tool holder so that the car is aligned with the articulated arm or perpendicular to the arm and moving the arm so that the car is close to the platform. Thus, the car is moved to a suitable transport position which will enable transportation of the car in a secure way.

The vehicle according to the invention is intended to be used for rescuing racing cars during motor races, such as rally cars and formula cars.

### Brief description of the drawings

The invention will now be explained more closely by the description of different embodiments of the invention and with reference to the appended figures.
Fig. 1 shows an example of a vehicle for rescuing racing cars according to the invention.
Fig. 2a shows an example of a tool suitable for holding a rally car in a side view.
Fig. 2b shows the tool shown in fig. 2a in a view from above.
Fig. 3a shows an example of a tool suitable for holding a formula car in a front view.
Fig. 3b shows the tool shown in figure 3a in a side view.
Fig. 4 shows in an example of a swivelling tool holder.
Figs. 5a - 5g illustrate an example of a method for rescuing rally cars using the vehicle.
Figs. 6a - 6g illustrate an example of a method for rescuing formula cars using the vehicle.

### Detailed description

Aspects of the present invention will be described more fully hereinafter with reference to the accompanying drawings. The invention can, however, be realized in many different forms and should not be construed as being limited to the aspects set forth herein. Like numbers in the drawings refer to like elements throughout.

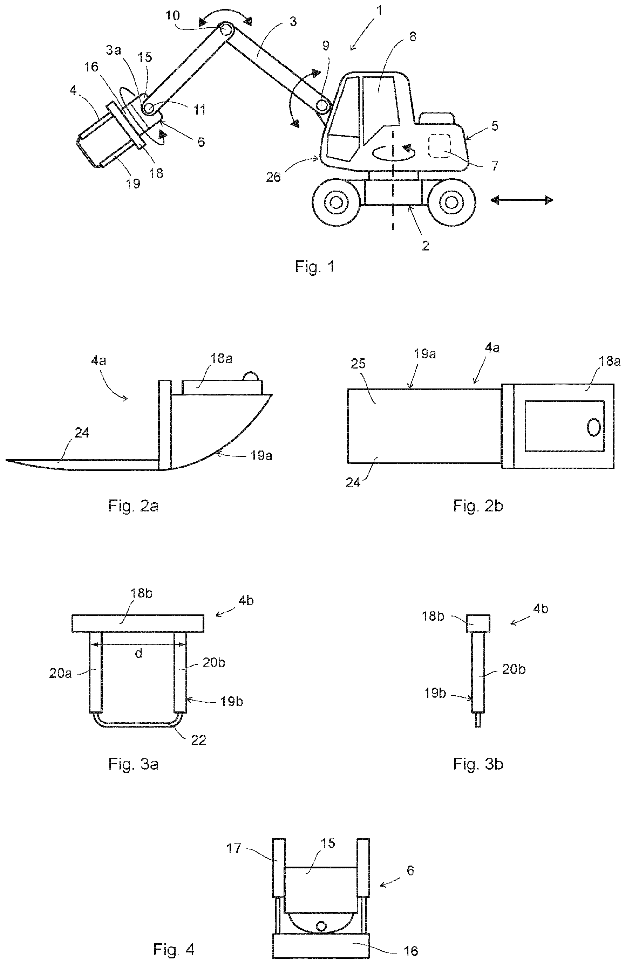

Figure 1 shows an example of a vehicle 1 for rescuing racing cars according to the invention. The vehicle 1 comprises a carriage 2 movable in at least two opposite linear directions. The carriage can, for example, be an undercarriage of an excavator. The carriage 1 may comprise wheels or caterpillar feet. The motions of the carriage are controlled by a driver of the vehicle. The platform 5 is rotatably connected to the carriage 2 so that the platform 5 is rotatable at least 180° with respect to the carriage 2. However, the platform 5 can be rotatable more than 180° with respect to the carriage 2.

The vehicle 1 comprises an arm 3 for lifting the racing cars. The arm 3 is attached to the platform 5. The arm 3 is movable with respect to the platform about at least two joints 9, 10. In the illustrated example, the arm comprises two elongated arm parts and a hinge joint 10 arranged between the arm parts, and the arm 3 is pivotably coupled to the platform 5 by means of a joint 9. Suitably, the joins 9, 10 of the arm 3 are hinge joints. Hinge joint are simpler to control than rotating joints.

The vehicle 1 comprises a cabin 8 for the driver of the vehicle. For example, the cabin 8 is integrated in the platform 5. The cabin 8 comprises control equipment, such as control levers and a control panel, forming a user interface allowing the driver of the vehicle to control the motions of the vehicle. The control equipment can be any type of control equipment known in the art for controlling a vehicle, such as an excavator.

The vehicle 1 comprises a swivelling tool holder 6 for holding a tool 4. For simplicity, the swivelling tool holder 6 is referred to as the tool holder 6 in the following. The tool holder 6 is coupled to an outer end 3a of the arm 3. The tool holder has a rotatable joint that makes it possible to rotate the tool 4 relative to the outer end 3a of the articulated arm, and accordingly relative to the platform 5. The tool holder 6 is arranged to rotate the tool 4 in two opposite directions. In the illustrated example, the tool holder 6 is pivotably coupled to an outer end 3a of the arm, by means of a joint 11. Thus, the tool holder 6 is pivotable relative to the arm 3, which increases the degrees of freedom of the movement of tool 4 relative to the platform 5. The swivelling tool holder 6 comprises an inner part 15 attached to the outer end 3a of the arm, and an outer part 16 rotatably arranged with respect to the inner part 15. The inner part 15 may be pivotably attached to the outer end 3a of the arm. The tool 4 is fixedly attached to the outer part 16 of the tool holder 6. For example, the swivelling tool holder is a tilt rotator. However, other types of swivelling tool holder without the tilt function can be used.

The vehicle 1 comprises a tool 4 for holding the car during the rescue. The tool 4 is rigidly connected to the tool holder 6 so that the tool 4 is rotated upon rotation of the swivelling tool holder 6. The tool 4 is configured to hold the racing car in such way so that the racing car follows the movements of the tool and is rotated upon rotation of the tool. Thus, the racing car is rotated when the tool is rotated by means of the swivelling tool holder 6. Preferably, the vehicle 1 is configured to allow rotation of the racing car in a horizontal plane. Thus, the racing car keeps its angular position relative the ground during the rescue action.

For example, the tool 4 is configured to hold the car in a rigid or semirigid way so that the car hold by the tool is rotated upon rotation of the tool 4. Thus, the driver of the vehicle can precisely control the motion and position of the car with respect to the vehicle during the rescue. For example, the driver can rotate the car to a suitable transportation position with respect to the platform when the vehicle carries the car. The tool 4 is designed to hold the car so that the car will not spin around when the tool holder rotates the tool, due to the mass inertia of the car. Thus, there is no need of any service personnel holding the car during the transportation of the car. The tool 4 comprises a connection part 18 rigidly connected to the outer part 16 of the tool holder 6. The tool 4 further comprises a holding member 19 configured to hold the racing car when the vehicle moves the racing car. The holding member 19 is rigidly attached to the connection part 18. The holding member 19 is configured to hold the racing car so that rotation of the racing car with respect to the platform 5 is controlled by the rotational movements of the swivelling tool holder 6 when the tool has lifted the racing car from the ground. The holding member 19 is configured to hold the car in a rigid or semirigid way so that the car hold by the tool is rotated upon rotation of the tool. This makes it possible to control the position of the car with respect to the platform when the tool has lifted the car. The term semirigid means partly rigid, but not fully rigid.

The movements of the carriage 2, the platform 5, the arm 3, and the tool holder 6 are driven by motors included in the vehicle. The vehicle 1 comprises a control system 7 for controlling the motions of the carriage 2, the platform 5, the arm 3, and the tool holder 6 upon receiving commands from a driver of the vehicle. The driver of the vehicle generates commands to the control system using the control equipment. The control system comprises suitable hardware and software capable of converting the commands into physical movement of the vehicle, such as movement of the the carriage 2, the platform 5, the arm 3, and the tool holder 6.

For example, the vehicle comprises an excavator provided with a tilt rotator.

Figure 2a shows a first example of a tool 4a for holding a car in a side view, and figure 2b shows the tool 4a in a view from above. The tool 4a is suitable for holding rally cars. The tool 4a comprises a connection part 18a for connection to the outer part 16 of the tool holder 6 and a holding member 19a for holding the racing car. The holding member 19a is rigidly attached to the connection part 18a. The holding member 19a has an L-shaped design and comprises a protruding part 24 to be inserted under the car. The protruding part 24 protrudes in a direction away from the arm 3 so that protruding part to be inserted under the car. The protruding part has a bearing surface 25 design so that an undercarriage of the car can bear on the protruding part 24. In this example, the protruding part 24 is rectangular. However, the protruding part can have other shapes, such the shape of a fork.

Figure 3a shows a second example of a tool 4b for holding a car in a front view, and figure 3b shows the tool 4b in a side view. The tool 4b is suitable for holding formula cars provided with a protrusion on top of the car. The tool 4b comprises a connection part 18b for connection to the outer part 16 of the tool holder 6 and a holding member 19b for holding the racing car. The holding member 19b is rigidly attached to the connection part 18b. The holding member 19b comprises two spaced apart contact portions 20a, 20b and a strap 22 extending between the two contact portions 20a, 20b. In the illustrated example, the contact portions 20a, 20b are two spaced apart arms. The inner ends of the arms are rigidly connected to the swivelling tool holder 6 and the strap is arranged between the outer ends of the arms. Preferably, the length of the strap 22 is between 100% and 150% of the distance d between the two contact portions 20a, 20b. Most preferably, the length of the strap 22 is between 110% and 150% of the distance d between the two contact portions 20a, 20b. This gives the strap 22 some flexibility to facilitate the manoeuvre to put the strap on a protrusion of the car, while the connection between the car and the tool becomes rigid enough to allow the car to be rotated upon rotation of the tool in a controlled way. The strap is suitably made of a flexible material, such as textile or reinforced textile. For example, textile reinforced with Kevlar is a suitable material. Thus, the strap has some flexibility to facilitate the manoeuvre to put the strap on the protrusion of the formula car. When the tool 4b is to be connected to the car, the strap 22 is inserted under a protrusion of the formula car, and the arms extend on opposite sides of the protrusion.

Figure 4 shows in an example of a swivelling tool holder 6. The tool holder 6 comprises an inner part 15 and an outer part 16 rotatably arranged with respect to the inner part 15. In this example, the tool holder 6 comprises a plurality of actuators 17 arranged between the inner and outer parts 15, 16 so that the outer part 16 can be tilted relative to the inner part 15. This embodiment makes it easy to adjust the inclination of the platform to match the inclination of the car to be rescued. This is advantageous if the vehicle 1 is to be used to rescue rally cars.

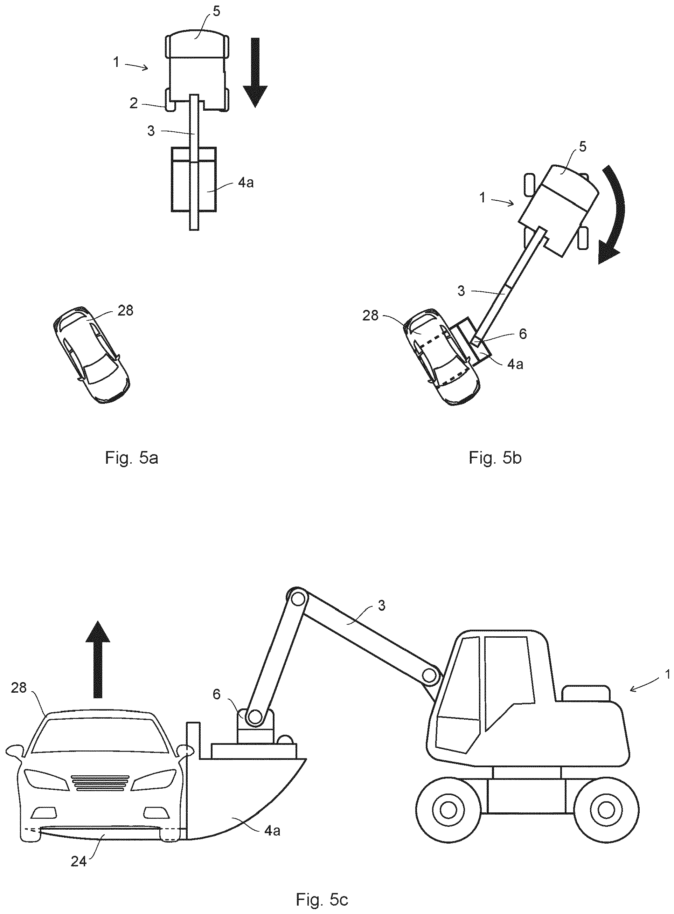

An example of a method for rescuing a rally car 28 by using the vehicle 1 and the tool 4a will now be described with reference to figures 5a - 5g.

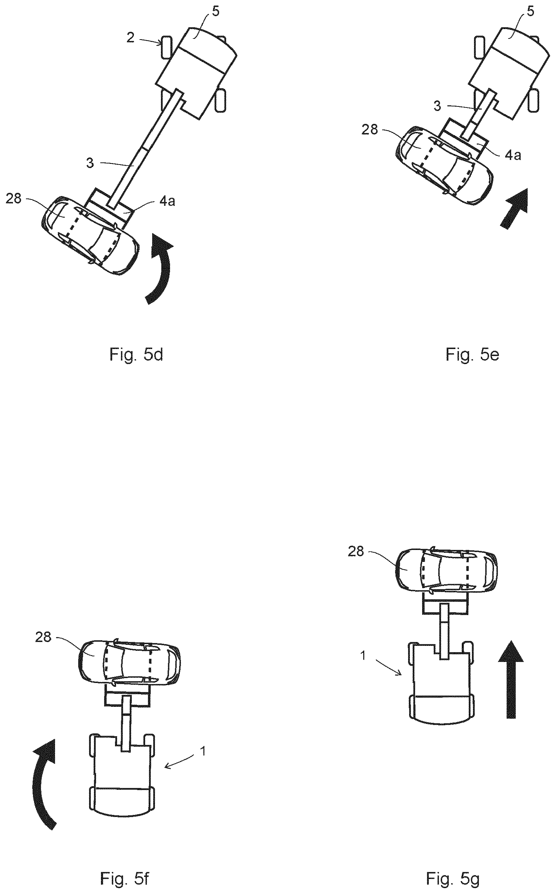

The method comprises:
a) Moving the vehicle 1 by means of the carriage 2 in a first direction towards the car 28 until the vehicle 1 is close to the car 28 to be rescued, as shown in figure 5a.
b) Rotating the platform 5 so that the arm 3 is pointing towards the car 28 and moving the tool 4a towards the car 28 by means of the articulated arm 3, as shown in figure 5b.
c) Connecting the tool 4a to the car 28 by means of the arm 3 and rotation of the tool holder 6. In the illustrated example, this is done by inserting the protruding part 24 of the tool 4a under the car, as shown in figure 5c. The tool holder 6 is used to rotate the tool 4a so that the protruding part 24 is aligned with the opening under the car, and the arm 3 is used to move the protruding part 24 of the tool 4a under the car 28 through the opening between the wheels of the car.
d) Lifting the car from the ground by means of the arm 3. When the protruding part 24 of the tool 4a has been positioned under the car, the car is lifted.
e) Moving the car 28 to a transport position by means of the arm 3 and rotation of the tool holder 6, as shown in figures 5d and 5e. The car is moved to a transport position to facilitate the transportation of the car and to increase the safety of the transportation. Typically, the vehicle rotates the racing car in the horizontal plane to keep the car in its original angle relative to the ground. Thus, the car is not tilted relative to the ground. Figure 5e shows an example of a suitable transport position. In this transport position, the car is arranged perpendicular to the arm 3 and close to the platform 5. In the illustrated example, this step comprises rotating the tool holder 6 so that the car is perpendicular to the arm 3 and moving the arm 3 so that the car is closer to the platform 5.
f) Rotating the platform 5 so that the arm 5 is pointing in a second direction opposite the first direction, as shown in figure 5f. The platform is rotated about 180° with respect to the first direction. This means that the car is moved to the opposite side of the vehicle and is facing away from the place where it was picked up. Rotating the platform is much faster than to turn around the entire vehicle. Thus, moving the car away from the racing track can be done quickly.
g) Moving the carriage 2 in the second direction with the car 28 in front of the vehicle, as shown in figure 5g. The car can now be moved to a service station.

Steps f and g are optional. It is also possible to move the carriage with the car in front of the vehicle in any desired direction depending on the current situation. For example, the carriage 2 may be moved in the first direction if there is no obstacle, such as the racing track, in the first direction.

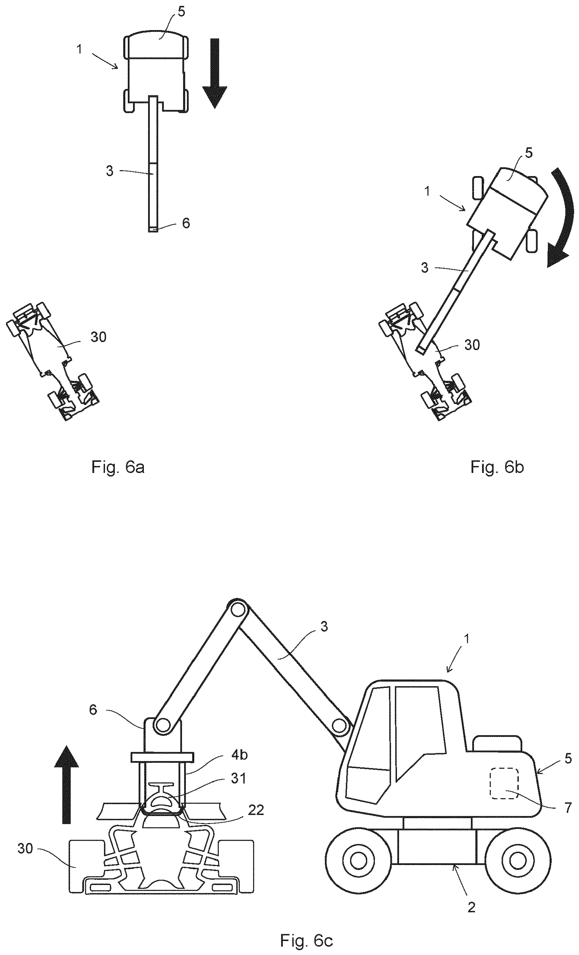

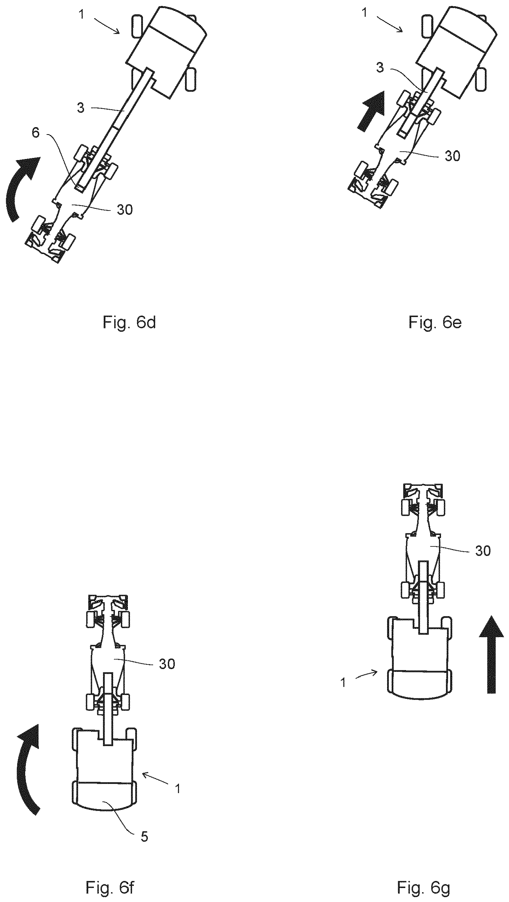

An example of a method for rescuing a formula car 30 provided with a protrusion 31 on top of the car, by using the vehicle 1 and the tool 4b, will now be described with reference to figures 6a - 6g.

The method comprises:
a) Moving the vehicle 1 by means of the carriage 2 in a first direction towards the formula car 30 until the vehicle 1 is close to the car 30 to be rescued, as shown in figure 6a.
b) Rotating the platform 5 so that the arm 3 is pointing towards the formula car 30 and moving the tool 4b towards the car 30 by means of the articulated arm 3, as shown in figure 6b. The tool is moved to a position above the car by means of the articulated arm.
c) Connecting the tool 4b to the car 30 by means of the arm 3 and rotation of the tool holder 6. In the illustrated example, this is done by inserting the strap 22 of the tool 4b under the protrusion 31 of the car 30, as shown in figure 6c. The tool holder 6 is used to rotate the tool 4b so that the strap 22 is aligned with an opening between the protrusion 31 and the car 30, and the arm 3 is used to move the strap 22 under the protrusion 31 through the opening between the protrusion and the car.
d) Lifting the car from the ground by means of the arm 3. When strap 22 has been positioned under the protrusion 31, the car is lifted from the ground.
e) Moving the car 30 to a transport position by means of the arm 3 and rotation of the tool holder 6 to increase the safety of the transportation, as shown in figures 6d and 6e. Figure 6e shows an example of a suitable transport position. In this transport position, the car is aligned with the arm 3 and close to the platform 5. In the illustrated example, this step comprises rotating the tool holder 6 so that the car is aligned with the arm 3 and moving the arm 3 so that the car is closer to the platform 5.
f) Rotating the platform 5 so that the arm 5 is pointing in a second direction opposite the first direction, as shown in figure 5f.
g) Moving the carriage 2 in the second direction with the car 30 in front of the vehicle, as shown in figure 5g. The car can now be moved to a service station.

The present invention is not limited to the embodiments disclosed but may be varied and modified within the scope of the following claims. For example, the tool and the tool holder can be designed in different ways. The number and design of the joints of the arm 3 may vary.

### Reference list

1. vehicle
2. carriage
3. arm
3a. outer end of the arm
4. tool
4a. first example tool
4b. second example tool
5. platform
6. swivelling tool holder
7. control system
8. cabin
9, 10, 11 joints of the arm
15. inner part of the tool holder
16. outer part of the tool holder
17. actuators
18a, 18b connection part
19, 19a, 19b holding member
20a-b contact portions
22 strap
24. protruding part of the tool
25 Bearing surface
26 excavator
28 rally car
30 formula car
31 protrusion of the formula car
d length between contact portions

## Claims

1. A vehicle (1) for rescuing racing cars, wherein the vehicle (1) comprises:
- a carriage (2) linearly movable in at least two opposite directions along the ground,
- an arm (3) for lifting the racing car, and
- a tool (4; 4a; 4b) connected to the arm (3) for holding the car during the rescue, **characterized in that** the vehicle (1) comprises:
- a platform (5) rotatably connected to the carriage (2) so that the platform (5) is rotatable at least 180° with respect to the carriage (2),
- a swivelling tool holder (6) comprising an inner part (15) attached to the outer end (3a) of the arm, and an outer part (16) rotatably arranged with respect to the inner part (15), and
- a control system (7) for controlling the motions of the platform (5), the swivelling tool holder (6), and the arm (3) upon receiving commands from a driver of the vehicle, wherein the arm (3) is attached to the platform (5), the tool (4; 4a; 4b) comprises a connection part (18; 18a; 18b) rigidly connected to the outer part (16) of the swivelling tool holder (6) so that the tool is rotated upon rotation of the outer part of (16) of the swivelling tool holder, and a holding member (19; 19a; 19b) for holding the racing car, wherein the holding member (19; 19a; 19b) is rigidly attached to the connection part (18; 18a; 18b) and configured to hold the racing car in such way that the racing car is rotated upon rotation of the tool.

2. The vehicle according to claim 1, wherein the holding member (19a; 19b) is configured to hold the racing car in a rigid or semirigid way so that rotation of the racing car with respect to the platform (5) is controlled by the rotational movements of the swivelling tool holder (6) when the tool (4; 4a; 4b) has lifted the racing car from the ground.

3. The vehicle according to claim 1 or 2, wherein said holding member (19b) comprise two spaced apart contact portions (20a, 20b) rigidly connected to the outer part (16) of swivelling tool holder (6), and a strap (22) extending between the two contact portions (20a, 20b).

4. The vehicle according to claim 3, wherein the length of said strap (22) is at most 150% of the distance (d) between the two contact portions (20a, 20b), and preferably the length of the strap (22) is at most 130% of the distance (d) between the two contact portions (20a, 20b).

5. The vehicle according to claim 4, wherein the length of said strap (22) is at least 110% of the distance (d) between the two contact portions (20a, 20b).

6. The vehicle according to any of the claims 3 - 5, wherein said contact portions (20a, 20b) are two spaced apart arms rigidly connected to the swivelling tool holder (6).

7. The vehicle according to claim 1 or 2, wherein said holding member (19a) has an L-shaped design and comprises a protruding part (24) to be inserted under the car.

8. The vehicle according to any of the previous claims, wherein said arm (3) is an articulated arm having at least two joints (9, 10; 11).

9. The vehicle according to any of the previous claims, wherein said swivelling tool holder (6) comprises one or more actuators (17) arranged between the inner and outer parts (15, 16) so that the outer part can be tilted relative to the inner part.

10. A method for rescuing racing cars using a vehicle (1) comprising:
- a carriage (2) linearly movable in at least two opposite directions along the ground,
- an arm (3) for lifting the racing car, and
- a tool (4; 4a; 4b) connected to the arm (3) for holding the car during the rescue,
- a platform (5) rotatably connected to the carriage (2) so that the platform (5) is rotatable at least 180° with respect to the carriage (2),
- a swivelling tool holder (6) comprising an inner part (15) attached to the outer end (3a) of the arm, and an outer part (16) rotatably arranged with respect to the inner part (15), and
- a control system (7) for controlling the motions of the platform (5), the swivelling tool holder (6), and the arm (3) upon receiving commands from a driver of the vehicle, wherein the arm (3) is attached to the platform (5), the tool (4; 4a; 4b) comprises a connection part (18; 18a; 18b) rigidly connected to the outer part (16) of the swivelling tool holder (6) so that the tool is rotated upon rotation of the outer part of (16) of the swivelling tool holder, and a holding member (19a; 19b) for holding the racing car, and the holding member (19a; 19b) is configured to hold the racing car in such way so that the car is rotated upon rotation of the tool, **characterized in that** the method comprises:
a) moving the carriage (2) towards the car until the vehicle is close to the car to be rescued,
b) rotating the platform (5) so that the arm (3) is pointing towards the car,
c) moving the tool (4; 4a; 4b) towards the car by means of the arm (3),
d) connecting the tool (4; 4a; 4b) to the car by means of the arm (3) and rotation of the swivelling tool holder (6),
e) lifting the car by means of the arm (3),
f) moving the car to a transport position by means of the arm (3) and rotation of the swivelling tool holder (6), and
g) moving the carriage (2) with the car in front of the vehicle (1).

11. The method according to claim 10, wherein the step a comprises moving the carriage (2) in a first direction until the vehicle (1) is close to the car to be rescued, and the step g comprises rotating the platform (5) so that the arm (3) is pointing in a second direction opposite the first direction, and moving the carriage (2) in the second direction with the car in front of the vehicle.

12. The method according to claim 10 or 11, wherein step f comprises rotating the swivelling tool holder (6) so that the car is aligned with the arm (3) or perpendicular to the arm, and moving the arm (3) so that the car is closer to the platform (5).

13. Use of the vehicle (1) according to any of the claims 1 - 9 for rescuing racing cars during motor races.

14. Use of the vehicle (1) according to any of the claims 1 - 9 for rescuing formula cars and/or rally cars.
